# EUROPEAN PATENT APPLICATION

(11) **EP 0 721 853 A1**
(43) Date of publication of application: **17.07.1996**
(21) Application number: 96300123.5
(22) Date of filing: 08.01.1996
(51) Int. Cl.: B60C 11/03, B60C 11/04

(54) **Heavy duty pneumatic tires**

(30) Priority: 11.01.1995 JP 2431/95
(71) Applicant: Bridgestone Corporation, Tokyo (JP)
(72) Inventor: Kukimoto, Takashi, Kodaira City, Tokyo (JP)
(74) Representative: Whalley, Kevin

(57) **Abstract**

A heavy duty pneumatic tire (1) having a directional pattern defined by arranging plural pairs of main grooves (5a, 5b) at a given interval along a circumference (6) of the tire, in which the main grooves (5a, 5b) extend from a central zone of a ground contact region (3) of a tread toward both side ends (4a, 4b) of the tread in a diverging direction, and each main groove is provided in at least one groove wall (7a, 7b) with a gouge portion (9) enlarging the groove bottom (8).

## Description

This invention relates to a heavy duty pneumatic tire having a directional pattern, and more particularly to a heavy duty pneumatic tire capable of preventing extreme degradation of excellent wet running performances inherent to the directional pattern even in such a last stage of service life that a remaining groove depth of a main groove is fairly reduced by wearing a tire tread.

From the description of JP-A-63-106114, it is known that the heavy duty pneumatic tires having the directional pattern are excellent in the wet running performances. Particularly, tires having a small aspect ratio among these tires is wide in the ground contacting width and hardly discharge water penetrated in the ground contact region outward from the ground contact region. In order to enhance the water discharging property of the tire, therefore, it is general to widen the width of the main groove toward each side end of the tread to increase the groove volume. Because, when the tread is divided into a central portion and both shoulder portions, water penetrated in the ground contact region is discharged from the central portion through the main groove toward the shoulder portion and hence the water flowing amount increases from the central portion toward the shoulder portion.

However, when the groove width of the main groove is widened toward the side end of the tread to increase the groove volume, the negative ratio becomes larger in the shoulder portion than in the central portion and hence the ground contact pressure per unit area of the tread becomes higher in the shoulder portion and the bearing at the exterior input such as cornering force or the like becomes large in the shoulder portion. As a result, the worn amount of the shoulder portion is fairly larger than that of the central portion, whereby uneven wearing due to heel and toe wear is apt to be caused and also the remaining groove depth of the main groove located at the shoulder portion is considerably decreased to largely reduce the groove volume and hence the wet running performances are degraded.

It is, therefore, an object of the invention to provide heavy duty pneumatic tires capable of controlling the degradation of wet running performances inherent to the directional pattern by rationalizing the groove bottom shape of the main groove to suppress the large decrease of groove volume in the main groove even in such a last stage of service life that the remaining groove depth of the main groove is fairly reduced by the wearing of the tire tread.

According to the invention, there is the provision of in a heavy duty pneumatic tire having a directional pattern defined by arranging plural pairs of main grooves at a given interval along a circumference of the tire, each pair of which grooves extending from a central zone of a ground contact region of a tread toward both side ends of the tread in a diverging direction at a front face of a rotating tire, the improvement wherein each of the main grooves is provided at at least one groove wall with a gouge portion enlarging a groove bottom viewing a radial section of the main groove.

In a preferable embodiment of the invention, the gouging amount of the gouge portion is made large in accordance with the diverging direction of the main groove in order to extremely maintain the water drainage ability of the main groove even in the last stage of service life that the remaining groove depth of the main groove is fairly reduced by the wearing of the tire tread and reduce the ground contact pressure of the shoulder portion to uniformize the distribution of ground contact pressure of the tread portion.

In another preferable embodiment of the invention, a plurality of auxiliary grooves each opening at its both ends to the two main grooves are disposed at a given interval along the main groove in order to more uniformize the distribution of ground contact pressure of the tread portion and improve the running performances on snow while suppressing the uneven wear. Furthermore, it is favorable that the groove width is made narrower in the auxiliary groove near to the side end of the tread among these auxiliary grooves. Moreover, it is favorable that at least one groove wall of the auxiliary groove is provided with a gouge portion enlarging the groove bottom likewise the main groove.

The invention will be described with reference to the accompanying drawings, wherein:
Fig. 1 is a diagrammatic view of a typical embodiment of the heavy duty pneumatic tire according to the invention viewed from a front face of a tread;
Fig. 2 is a diagrammatic view of another embodiment of the heavy duty pneumatic tire according to the invention viewed from a front face of a tread;
Fig. 3a is a schematic view illustrating a sectional shape of a main groove having a gouge portion in only one-side groove wall;
Fig. 3b is a schematic view illustrating a sectional shape of the main groove taken along a line IIIb-IIIb of Fig. 1 and having gouge portions in both groove walls;
Fig. 4 is a schematic view illustrating a sectional shape of a main groove in the conventional tire;
Fig. 5 is a plan view of a tread pattern used in the conventional tire;
Fig. 6 is a plan view of another tread pattern used in the conventional tire;
Fig. 7a is a graph showing evaluation results of wet performance at new tire;
Fig. 7b is a graph showing evaluation results of wet performance at last stage of service life; and
Fig. 8 is a graph showing evaluation results of uneven wear on various test tires.

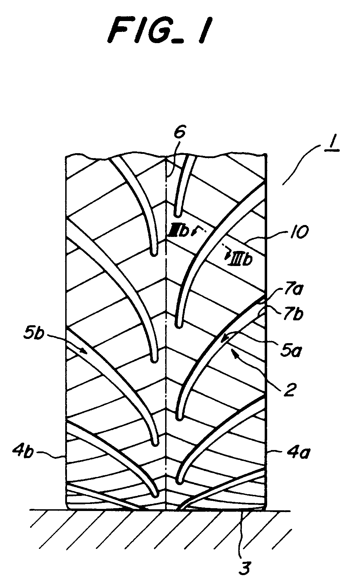

In Fig. 1 is shown a typical embodiment of the heavy duty pneumatic tire according to the invention viewed from a front face of a tread, wherein numeral 1 is a heavy duty pneumatic tire, numeral 2 a front face of a tread, numeral 3 a ground contact region of the tread, numerals 4a, 4b both side ends of the tread, numerals 5a, 5b main grooves, numeral 6 a circumference of the tire, numerals 7a, 7b groove walls of the main groove, numeral 8 a groove bottom of the main groove, numeral 9 a gouge portion in the groove wall of the main groove, numeral 10 a notched sipe, and numerals 11a-11e auxiliary grooves.

In the heavy duty pneumatic tire 1 having a tread shown in Fig. 1, a pair of main grooves 5a, 5b extend from a central zone of the ground contact region 3 of the tread toward both side ends 4a, 4b of the tread in the diverging direction of the tread at the front face 2 of the rotating tire 1 and a plurality of these pairs are arranged at a given interval along the circumference 6 of the tire. In the illustrated embodiment, the main grooves 5a, 5b are shifted to each other and terminated in a land portion so as not to communicate the main grooves 5a, 5b with each other. These main grooves 5a, 5b may be arranged in line symmetry with each other with respect to an equatorial plane of the tire, or may be communicated with each other. That is, various modification may be taken, if necessary.

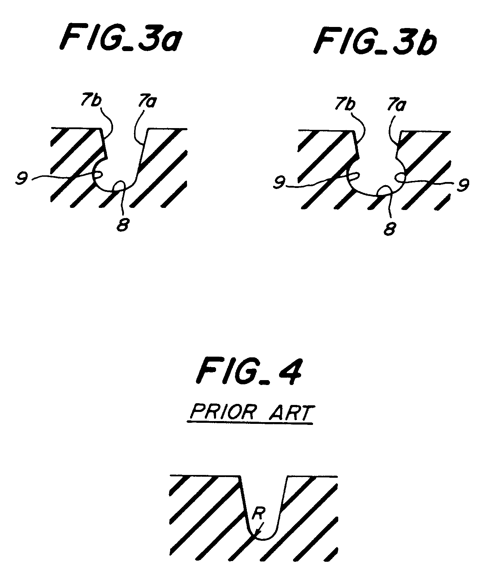

In the main groove 5a or 5b, at least one of groove walls 7a, 7b is provided with the gouge portion 9 enlarging the groove bottom 8 viewing the radial section of the groove. The case that the gouge portion 9 is provided on only the one-side groove wall 7b is shown in Fig. 3a, while the case that the gouge portions 9 are provided on both groove walls 7a, 7b is shown in Fig. 3b. Moreover, when the gouge portion 9 is arranged on only the groove wall, it is preferable that the gouge portion is formed on a groove wall of the main groove 5a precedingly contacting with ground (7b in Fig. 1) from a viewpoint of the improvement of resistance to uneven wear.

Considering the feature that the amount of water discharged increases from the central zone of the tread portion toward the shoulder portion, it is preferable that the gouging amount of the gouge portion 9 at the groove walls of the main grooves 5a, 5b is increased in the diverging direction of the main groove 5a, 5b or from the central zone of the tread portion toward the shoulder portion. Furthermore, it is desirable that the gouge portion 9 is rendered into an arc shape at radial section of the groove in order to prevent the occurrence of ozone cracks in the groove bottom. Moreover, in order to more enhance the water drainage ability, the groove width of the main groove 5a is widened toward the side end 4a of the tread in Fig. 1 likewise the conventional case, but the groove width may be constant. That is, the groove width may properly be changed, if necessary.

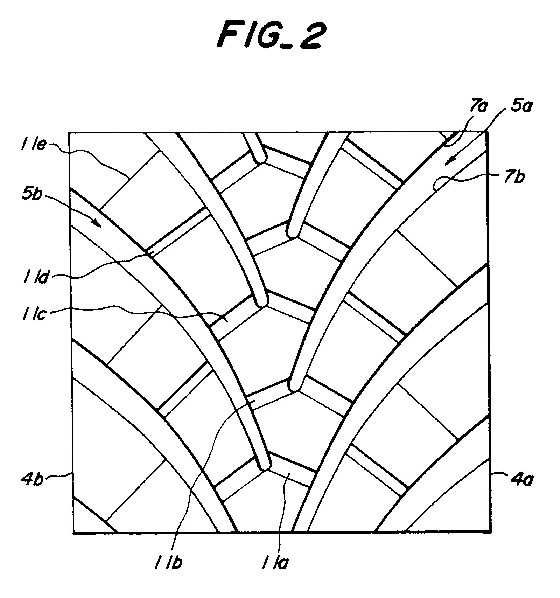

In the tire of Fig. 1, a plurality of notched sipes 10 straightforward extending from both side ends 4a, 4b of the tread across the maing grooves 5a, 5b and intersecting at the equator of the tire are arranged in order to uniformize the ground contact pressure of the tread. Particularly, when it is required to uniformize the ground contact pressure of the tread by making the negative ratios at the central zone of the tread portion and the shoulder portion approximately equal to each other, as shown in Fig. 2, auxiliary grooves 11a-11e each opening at both ends to the two main grooves are arranged at given intervals along the main groove, in which it is preferable to make the widths of these auxiliary grooves 11a-11e narrower toward the side near to the tread end. In addition, it is favorable that at least one of groove walls in these auxiliary grooves 11a-11e is provided with a gouge portion 9 enlarging the groove bottom likewise the main groove.

The arrangement of the auxiliary groove attains the uniformization of the ground contact pressure of the tread to suppress the uneven wear produced in the tread and improve the performances on snow.

In the heavy duty pneumatic tire according to the invention, at least one groove wall of the main groove is provided with the gouge portion enlarging the groove bottom, so that even when the remaining groove depth of the main groove is decreased by the wearing of the tread, the decreasing percentage of the groove volume in the main groove is made small, whereby the degradation of the water discharging ability can be controlled as far as possible.

Furthermore, the gouging amount of the gouge portion in the main groove is made larger from the central zone of the tread portion toward the shoulder portion. That is, the groove volume of the main groove can be increased in correspondence with the case that when the water entered into the ground contact region is discharged from the central zone of the tread portion through the main groove toward the shoulder portion, the flow amount of water becomes large in this direction, whereby the water discharge through the main groove can be attained smoothly. This is particularly effective when the remaining groove depth of the main groove is decreased by the wearing of the tread. Moreover, when the gouging amount of the gouge portion in the main groove is made larger from the central zone of the tread portion toward the shoulder portion, the ground contact pressure of the shoulder portion being apt to be increased can be reduced as compared with the central zone, whereby the ground contact pressure of the tread can be uniformized.

Further, a plurality of auxiliary grooves each opening at both ends to the two main grooves are arranged at intervals along the main groove and the width of the auxiliary groove is made narrower toward the side near to the tread end, whereby the distribution of ground contact pressure in the tread is more uniformized. And also, the at least one groove wall of the auxiliary groove is provided with the gouge portion enlarging the groove bottom likewise the main groove, whereby the more uniformization of the ground contact pressure can be attained.

The following examples are given in illustration of the invention and are not intended as limitations thereof.

### Example 1:

A heavy duty pneumatic tire used in this example has a tread pattern as shown in Fig. 1 and a tire size of 11R22.5, in which a pair of main grooves 5a, 5b extend from a central zone of the ground contact region 3 of the tread toward both side ends 4a, 4b of the tread in the diverging direction of the tread at the front face 2 of the rotating tire 1 and a plurality of these pairs are arranged at a given interval along the circumference 6 of the tire. The main grooves 5a, 5b are shifted to each other by a half pitch (45 mm) and terminated in a land portion so as not to communicate them with each other.

As shown in Fig. 3b, the main groove 5a or 5b is provided at both groove walls 7a, 7b with arc-shaped gouge portions 9 enlarging the groove bottom 8 viewing at radial section of the groove. The gouging amount of the gouge portion 9 is increased from the central zone of the tread portion toward the shoulder portion and also the width of the main groove is made larger in the same direction. That is, the width of the main groove 5a, 5b is gradually increased from 5 mm to 10 mm toward the both side ends 4a, 4b of the tread, and the groove depth is 15 mm and the maximum width between the gouge portions 9 of the groove walls 7a, 7b is 11 mm.

Furthermore, a plurality of notched sipes 10 straightforward extending from both side ends 4a, 4b of the tread and intersecting at the equator of the tire are arranged at a width of 1 mm, a depth of 13 mm and a arranging pitch of 30 mm.

The carcass is comprised of a rubberized radial ply containing steel cords therein, and the belt is comprised of four rubberized cord layers, while the other tire structures are the same as in the conventional tire.

### Example 2:

The tire used in this example has a tread pattern as shown in Fig. 2 and substantially the same structure as in the tire of Example 1 except that the main grooves 5a, 5b are arranged at an arranging pitch of 90 mm so as to gradually increase the groove width from 5 mm to 10 mm toward both side ends 4a, 4b at a groove depth of 16 mm and provide gouge portions 9 at both groove walls 7a, 7b at a maximum width therebetween of 12 mm and a plurality of auxiliary grooves 11a -11e each opening at both ends to the two main grooves are arranged at intervals along the main groove and the widths of the auxiliary grooves 11a-11e are 10 mm, 7 mm, 4 mm, 2 mm and 1 mm, respectively.

### Comparative Example:

The tire used in this example has the same structure as in Example 1 except that the gouge portion 9 is not formed in the groove wall of the main groove 5.

### Conventional Example 1:

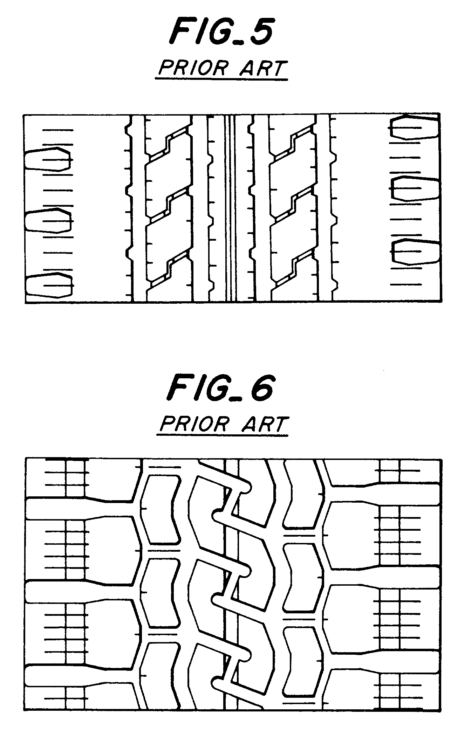

The tire used in this example is a conventional tire having a rib type pattern shown in Fig. 5.

### Conventional Example 2:

The tire used in this example is a conventional tire having a block-lug mixed pattern shown in Fig. 6.

### Test method and evaluation:

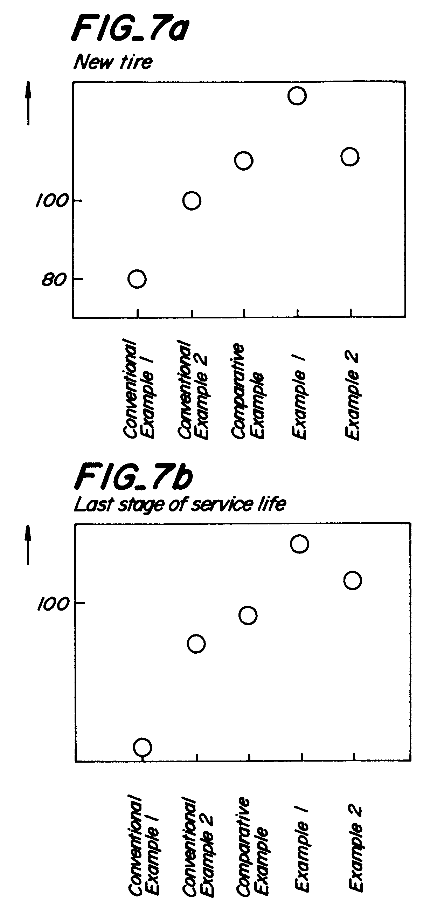

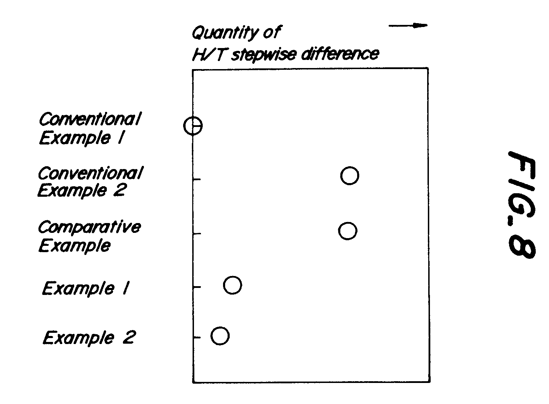

The performance on wet road and uneven wear are evaluated with respect to the above tires by measuring a braking distance on wet road and an amount of uneven wear at shoulder portion. As to the performance on wet road, the evaluation results at new tire and last stage of service life (remaining groove depth: 5 mm) are shown in Figs. 7a and 7b, while the evaluation results on the uneven wear are shown in Fig. 8. Moreover, the performance on wet road is represented by an index on the basis that the new tire of Conventional Example 2 is 100, in which the larger the index value, the better the property. On the other hand, the uneven wear is relatively evaluated by taking heel and toe stepwise amount on an ordinate, in which the smaller the stepwise difference, the better the property.

Examples 1 and 2 are superior to Conventional Examples 1 and 2 and Comparative Example in the performance on wet road at both cases of new tire and last stage of service life and hold a higher performance on wet road.

On the other hand, the uneven wear in Examples 1-2 is approximately equal to that of Conventional Example 1.

As mentioned above, in the heavy duty pneumatic tire according to the invention, even when the remaining groove depth of the main groove is reduced by the wearing of the tread at a last stage of service life of the tire, the decreasing percentage of the groove volume of the main groove can be made small to suppress the degradation of water discharge ability as far as possible, whereby the good wet performance can be ensured to the last stage of the tire.

Furthermore, the gouging amount of the gouge portion in the main groove is made larger from the central zone of the tread portion toward the shoulder portion, whereby the groove volume of the main groove can be increased in correspondence with the case that when the water entered into the ground contact region is discharged from the central zone of the tread portion through the main groove toward the shoulder portion, the flow amount of water becomes large in this direction, thus the water discharge through the main groove can be attained smoothly. This is particularly effective to ensure the good wet performance at such a last stage of service life that the remaining groove depth of the main groove is decreased by the wearing of the tread. Moreover, when the gouging amount of the gouge portion in the main groove is made larger from the central zone of the tread portion toward the shoulder portion, the ground contact pressure of the shoulder portion being apt to be increased can be reduced as compared with the central zone, whereby the ground contact pressure of the tread can be uniformized.

Further, a plurality of auxiliary grooves each opening at both ends to the two main grooves are arranged at intervals along the main groove and the width of the auxiliary groove is made narrower toward the side near to the tread end, whereby the distribution of ground contact pressure in the tread is more uniformized. And also, the at least one groove wall of the auxiliary groove is provided with the gouge portion enlarging the groove bottom likewise the main groove, whereby the more uniformization of the ground contact pressure can be attained.

## Claims

1. A pneumatic tire (1) having a directional pattern defined by arranging a plurality of pairs of main grooves (5a, 5b) at a given interval along a circumference (6) of the tire, each pair of which grooves (5a, 5b) extending from a central zone of a ground contact region (3) of a tread toward both side ends of the tread (4a, 4b) in a diverging direction at a front face (2) of a rotating tire, characterized in that each of the main grooves (5a, 5b) is provided in at least one groove wall (7a, 7b) with a gouge portion (9) enlarging a groove bottom (8) as viewed in a radial section of the main groove.

2. A pneumatic tire as claimed in claim 1, characterized in that the gouging amount of the gouge portion (9) is increased in accordance with the diverging direction of the main groove.

3. A pneumatic tire as claimed in claim 1 or 2, characterized in that a plurality of auxiliary grooves (11a - 11e) each opening at both ends to two main grooves (5a, 5b) are disposed at a given interval along the main groove.

4. A pneumatic tire as claimed in claim 3, characterized in that the groove width is made narrower in the auxiliary groove near to the side end of the tread among the said auxiliary grooves.

5. A pneumatic tire as claimed in claim 3 or 4, characterized in that at least one groove wall of the auxiliary groove is provided with a gouge portion enlarging the groove bottom likewise the main groove (5a, 5b).
